# EUROPÄISCHE PATENTSCHRIFT

(11) **EP 4 217 256 B1**
(45) Veröffentlichungstag und Bekanntmachung des Hinweises auf die Patenterteilung: **28.01.2026**
(21) Anmeldenummer: 21790091.9
(22) Anmeldetag: 24.09.2021
(51) Int. Cl.: B62D 49/08, E02F 3/30, E02F 3/34, E02F 9/18

(54) **ARBEITSMASCHINE**
WORK MACHINE
ENGIN DE TRAVAIL

(30) Priorität: 25.09.2020 DE 102020125042; 25.09.2020 DE 102020125036; 25.09.2020 DE 102020125047
(43) Veröffentlichungstag der Anmeldung: 02.08.2023
(73) Patentinhaber: Heinzler, Jonas, 88605 Sauldorf (DE)
(72) Erfinder: Heinzler, Jonas, 88605 Sauldorf (DE)
(74) Vertreter: Patentanwälte und Rechtsanwalt Weiß, Arat & Partner mbB
(86) Internationale Anmeldenummer: PCT/EP2021/076382
(87) Internationale Veröffentlichungsnummer: WO 2022/064000

(56) Entgegenhaltungen:
- WO-A1-2009/020509
- DE-A1- 102017 100 963
- US-A- 2 766 850

## Beschreibung

### Technisches Gebiet

Die Erfindung betrifft eine Arbeitsmaschine nach dem Oberbegriff des Anspruchs 1.

### Stand der Technik

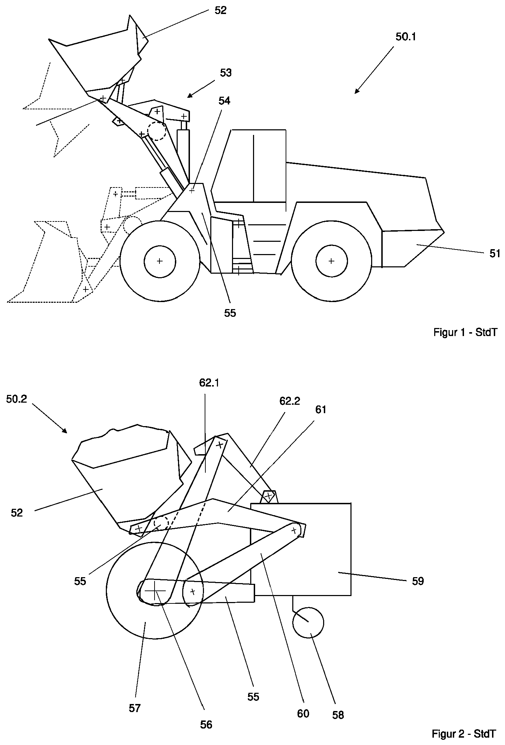

Aus dem Stand der Technik sind verschiedene Arbeitsmaschinen, wie beispielsweise Radlader, Baggerlader oder Kompaktlader bekannt, bei denen am vorderen Fahrzeugende ein Arbeitsgerät angebracht wird. Dieses Arbeitsgerät kann eine Schaufel sein, eine Stapelgabel oder andere, in der Land- und Bauwirtschaft gebräuchliche Arbeitsgeräte. Dabei kann das Arbeitsgerät, zum Beispiel die Schaufel, angehoben beziehungsweise abgesenkt werden. Dafür nutzt der Radlader (siehe Figur 1a und 1b) einen Hubrahmen, der auf der einen Seite mit Gelenken am Vorderwagen des Radladers drehbar angebracht wird. Dabei lassen die verwendeten Gelenke nur eine Drehbewegung in einer Fahrzeuglängsebene zu, wodurch sich der Hubrahmen ausschließlich nach oben oder nach unten drehen lässt. Das Arbeitsgerät, beim Radlader sehr oft eine Schaufel, bewegt sich dabei auf einer Kreisbahn, dessen Mittelpunkt die Gelenke darstellen, mit den der Hubrahmen am Fahrzeugrahmen angebracht ist. Auf der hinteren Seite befindet sich ein fest angebrachtes Gegengewicht. Die Stabilität dieses Radladers gegen ein Umkippen um die Vorderachse nach vorne wird im Wesentlichen durch das Gewicht in der Schaufel, deren Abstand zur Vorderachse sowie dem Gewicht des Gegengewichts und dessen Abstand zur Vorderachse beeinflusst. Dabei wirkt sich die Drehung des Hubrahmens auf der Kreisbahn nachteilig aus, da sich der Abstand in horizontaler Richtung beim Hochheben der Schaufel vom Boden erst noch vergrößert. Nachteilig an diesem Radlader ist die feste, nicht verschiebbare Position des Gegengewichts sowie der in horizontaler Richtung nicht veränderbare Abstand der Schaufel zur Vorderachse, außerhalb der fest vorgegeben Kreisbahn.

In diesem Zusammenhang wird auf die DE 10 2017 100 963 A1 hingewiesen, welche eine Arbeitsmaschine offenbart, die Folgendes umfasst:
- ein Arbeitsgerät oder eine Aufnahme für ein Arbeitsgerät,
- genau eine Hauptfahrzeugachse,
- beidseitig an der Hauptfahrzeugachse angeordnete Radelemente,
- den Radelementen zugeordnete Antriebseinheiten,
- zumindest eine Steuerung, wobei die Steuerung zumindest einen Regelkreis umfasst und eine Selbstbalancierung der Arbeitsmaschine um die Hauptfahrzeugachse bewirkt, und
- ein Gegengewicht, wobei eine Position des Gegengewichts gegenüber der Hauptfahrzeugachse über die Steuerung regelbar ist, sodass über eine Positionsverschiebung des Gegengewichts die Arbeitsmaschine um die Hauptfahrzeugachse ausbalanciert und in ihren Bewegungsrichtungen gesteuert werden kann.

### Aufgabe der Erfindung

Die Aufgabe der vorliegenden Erfindung ist es, die Nachteile aus dem Stand der Technik zu überwinden. Insbesondere ist es Aufgabe der Erfindung eine Arbeitsmaschine, beziehungsweise ein Fahrzeug bereit zu stellen, welches für die Bearbeitung der heute üblichen Arbeitsaufgaben von Arbeitsmaschinen geeignet ist und dabei eine hohe Wendigkeit und Flexibilität aufweist. Weiterhin ist es Aufgabe der Erfindung, eine Arbeitsmaschine, beziehungsweise ein Fahrzeug zur Verfügung zu stellen, welches ein geringeres Gewicht bei einer gleichbleibenden Leistungsfähigkeit sowie eine höhere Agilität und eine geringere Teiledichte aufweist. Weiterhin ist es Aufgabe der Erfindung, eine Arbeitsmaschine, beziehungsweise ein Fahrzeug bereit zu stellen, welches als Basisträgerfahrzeug flexibel für verschiedene Arbeitsgeräte nutzbar sein soll. Zudem soll es Aufgabe der Erfindung sein, eine Arbeitsmaschine, beziehungsweise ein Fahrzeug zur Verfügung zu stellen, mit dem eine Steigerung der Produktivität ermöglicht werden soll und das zudem modernen ökologischen Anforderungen entspricht.

### Lösung der Aufgabe

Zur Lösung der Aufgabe führen die Merkmale nach dem Anspruch 1. Vorteilhafte Ausgestaltungen sind in den Unteransprüchen beschrieben.

Dazu sollen Fahrzeuge mit einem verschiebbaren Gewicht und einem verschiebbaren Arbeitsgerät verwendet werden. Beide sollen in einem ausreichend weiten Bereich verschoben werden können, um somit ein sehr kompaktes Fahrzeug zu ermöglichen und den Fahrzeugschwerpunkt in einem idealen Bereich zu halten. Die Verschiebung des verschiebbaren Gewichts soll durch ein Gestänge erfolgen, welches das verschiebbare Gewicht sehr nahe in den Bereich der Hauptfahrzeugachse führt, oder darüber. Außerdem soll die Verschiebung des Arbeitsgeräts durch einen Schwenkarm und einen Arbeitsarm erfolgen, der das Arbeitsgerät sehr nahe an den Bereich der Hauptfahrzeugachse führt. Dazu soll ein Fahrzeugaufbau gefunden werden, bei welchem die Position und Bewegungsraum des Schwenkarms, des Arbeitsarms für die Aufnahme und Bewegung des Arbeitsgeräts, sowie die Position und Bewegungsraum des verschiebbaren Gewichts ermöglicht wird.

Eine erfindungsgemäße Arbeitsmaschine umfasst genau eine Hauptfahrzeugachse, beidseitig an der Hauptfahrzeugachse angeordnete Radelemente, ein Arbeitsgerät oder eine Aufnahme für ein Arbeitsgerät, wobei dieses durch mindestens einem Schwenkarm mit mindestens einem drehbar angeordneten Arbeitsarm an einem Fahrzeugrahmen angeordnet ist. Weiterhin umfasst die erfindungsgemäße Arbeitsmaschine mindestens ein verschiebbares Gewicht, wobei dieses durch mindestens ein Gestänge am Fahrzeugrahmen angeordnet ist. Dabei ist dem verschiebbaren Gewicht, den Gestängen und den Schwenkarmen mit den Arbeitsarmen jeweils ausschließlich ein Bewegungskanal entlang der Fahrzeuglängsrichtung zugeordnet.

Eine erfindungsgemäße Arbeitsmaschine weist somit im Gegensatz zu einer Arbeitsmaschine aus dem Stand der Technik einen Aufbau auf, der es ihr ermöglicht, sowohl das Arbeitsgerät mit seiner großen Masse, als auch das schwere verschiebbare Gewicht in den mittleren Bereich der Arbeitsmaschine zu verschieben, der in der Nähe der Hauptfahrzeugachse liegt. Somit kann der Fahrzeugschwerpunkt immer in diesem Bereich gehalten werden, womit eine stabile Lage für das Fahrzeug erreicht wird. Außerdem kann somit die erfindungsgemäße Arbeitsmaschine im Gegensatz zu einer Maschine aus dem Stand der Technik eine sehr kompakte Stellung einnehmen. Daraus ergibt sich der Vorteil, dass eine erfindungsgemäße Arbeitsmaschine an engen Einsatzorten eingesetzt werden kann, wie sie oft auf innerstädtischen Baustellen vorkommen und dort sehr agil betrieben werden kann. Außerdem ergibt sich daraus der Vorteil, dass eine deutlich leichtere Arbeitsmaschine bereitgestellt werden kann, die dennoch dieselbe nutzbare Last heben und transportieren kann, wie die vergleichbare Arbeitsmaschine aus dem Stand der Technik. Dies wird dadurch ermöglicht, dass sich bei der erfindungsgemäßen Arbeitsmaschine die Last beim Anheben sehr nahe an der Hauptfahrzeugachse befindet, ähnlich wie das bei Gegengewichtstaplern aus dem Stand der Technik der Fall ist. Nachdem diese soweit angehoben ist, dass das Arbeitsgerät und/oder die Last oberhalb der Radelemente liegt, kann sie noch weiter an die Hauptfahrzeugachse herangeführt werden. Das wird dadurch ermöglicht, dass sich die Arbeitsarme und Schwenkarme in den ihnen zugeordneten Bewegungskanälen frei und unabhängig von den Bewegungen des verschiebbaren Gewichts bewegen kann. Für das Anheben der Last vom Boden ist das verschiebbare Gewicht weit nach hinten ausgefahren. Somit kann dieses durch die Hebelwirkung seiner Position leicht sein und dennoch hohe Lasten am Arbeitsgerät ermöglichen, ohne dass das Fahrzeug seine stabile Lage verliert. Durch das vergleichbar geringe verschiebbare Gewicht wird das Gesamtgewicht des Fahrzeugs vorteilhaft beeinflusst. Sobald das Arbeitsgerät mit der aufgenommenen Last weiter über die Hauptfahrzeugachse eingezogen ist, wird im Gegenzug das verschiebbare Gewicht weiter eingezogen. Das wird dadurch ermöglicht, dass sowohl dem verschiebbaren Gewicht als auch den daran angeordneten Gestängen je eigene Bewegungskanäle zugeordnet sind, wodurch sich die Bewegungen des Arbeitsgeräts als auch die Bewegungen des verschiebbaren Gewichts im Wesentlichen nicht gegenseitig behindern.

Somit weist die erfindungsgemäße Arbeitsmaschine im Gegensatz zu einer Arbeitsmaschine aus dem Stand der Technik ein deutlich besseres Verhältnis der Nutzlast zum Eigengewicht auf. Besonders bei kleineren Arbeitsmaschinen liegt ein weiterer Vorteil darin, dass die erfindungsgemäße Arbeitsmaschine auf einfachen Fahrzeuganhängern transportiert werden kann, ohne dass deren maximal zulässiges Gesamtgewicht überschritten wird. Ein weiterer Vorteil der erfindungsgemäßen Arbeitsmaschine liegt darin, dass sie durch das geringere Gewicht innerhalb von Gebäuden in höheren Stockwerken eingesetzt werden kann, ohne deren maximal zulässige Bodenbelastung zu überschreiten. Dabei kann sie weiterhin mittels den in den Gebäuden vorhandenen Aufzügen in verschiedene Stockwerke gebracht werden, ohne die zulässige Nutzlast der Aufzüge zu überschreiten.

Bei einem bevorzugten Ausführungsbeispiel nimmt das verschiebbare Gewicht und der ihm zugeordnete Bewegungskanal eine mittlere Position auf der Fahrzeugquerachse ein. Daraus ergibt sich der Vorteil, dass dem verschiebbaren Gewicht und dem zugeordneten Bewegungskanal ein wesentlicher Anteil der Fahrzeugbreite zugeordnet werden kann. Da das verschiebbare Gewicht gleichzeitig ein Behälter darstellt, der verschiedene Funktionselemente, wie zum Beispiel Energiewandler, Öltanks und/oder Hydraulikpumpe, enthalten kann, nimmt dieses idealerweise die mittlere Lage in Querrichtung ein. Somit wird nur ein solcher Behälter benötigt und somit nur ein zentral liegender Bewegungskanal. Seitlich weiter außen sind je Seite ein Gestänge zur Verschiebung des verschiebbaren Gewichts angeordnet, wobei bei einem besonders bevorzugten Ausführungsbeispiel dafür mindesten zwei erforderlich sind. Somit sind die Arbeitsarme und die Schwenkarme seitlich ganz außen angeordnet. Bei dem bevorzugten Ausführungsbeispiel ist der Bewegungskanal für das verschiebbare Gewicht so angeordnet, dass seine untere Grenze oberhalb der Hauptfahrzeugachse liegt und seine obere Grenze unterhalb der für die seitliche Stabilität der Gestänge notwendigen Querstäben liegt. Darin liegt der Vorteil, dass die Gestänge sehr schmal ausgeführt werden können, da ihre seitliche Stabilität durch die Verwendung eines oder mehrere Querstäbe gewährleistet ist. Dadurch ergibt sich der Vorteil, dass die Bewegungskanäle für die Gestänge sehr schmal ausgeführt werden können und dass somit die Fahrzeugbreite vergleichbar schmal sein kann.

In einem typischen Ausführungsbeispiel liegen die Schwenkarme und die daran angeordneten Arbeitsarme jeweils in einer Ebene. Daraus ergibt sich der Vorteil, dass die durch die Last des Arbeitsgeräts wirkenden Kräfte, sowie die durch die Verstellelemente, beispielsweise von Hydraulikzylindern, keine übermäßig hohe Biegemomente erzeugen. Außerdem ergibt sich daraus der Vorteil, dass die für die freien Bewegungen notwendigen Bewegungskanäle schmal ausgeführt werden können. Dadurch können die erfindungsgemäßen Arbeitsmaschinen eine insgesamt schmale Bauweise aufweisen.

In einem weiteren Ausführungsbeispiel sind Schwenkarme und Arbeitsarme in seitlich, also in Richtung der Fahrzeugquerachse jeweils außen angeordnet, angrenzend zu den Bewegungskanälen der Gestänge. Daraus ergibt sich der Vorteil, dass die Schwenkarme und Arbeitsarme die ungleichmäßig am Arbeitsgerät angreifenden Kräfte aufnehmen können.

In einem weiteren typischen Ausführungsbeispiel sind die Radelemente in derselben Ebene wie die Schwenkarme und die Arbeitsarme angeordnet. Daraus ergibt sich der Vorteil, dass die erfindungsgemäße Arbeitsmaschine sehr schmal gebaut werden kann. Dadurch ist diese nicht nur in ihrer Fahrzeuglänge sehr kompakt, sondern auch in ihrer Breite. Bei einem Einsatz im Innern von Gebäuden haben solche Arbeitsmaschinen den Vorteil, dass sie beispielsweise Türöffnungen mit gebräuchlichen Öffnungsweiten durchfahren können.

In einem weiteren Ausführungsbeispiel umfasst eine erfindungsgemäße Arbeitsmaschine nur einen Schwenkarm und einen daran angeordneten Arbeitsarm. Dabei nehmen diese eine mittige Position ein, womit auch ein Bewegungskanal für den Schwenkarm und den Arbeitsarm auf einer auf der Fahrzeugquerachse mittigen Position zugeordnet wird. Der Vorteil bei diesem Ausführungsbeispiel liegt darin, dass weniger Antriebselemente zum Bewegen des Schwenkarms und des Arbeitsarms notwendig sind im Vergleich zu Maschinen mit mehreren Schwenkarmen und Arbeitsarmen. Falls elektrische Stellelemente verwendet werden, kann die oft verwendete hydraulische Anlage bestehend aus Ölbehälter, Hydraulikpumpe, Filter, Ventile und Schläuche entfallen. Die elektrischen Stellelemente, wie sie im Stand der Technik oft für den Antrieb von Roboterarmen verwendet werden, können direkt über elektrische Kabel aus einem elektrischen Speicher mit Energie versorgt werden. Dadurch kann die Anzahl der benötigten Komponenten kleiner sein. Allerdings sind die elektrischen Stellelemente selbst aufwändiger und teurer als Hydraulikzylinder. Daher ist ein Aufbau der erfindungsgemäßen Arbeitsmaschine bei einer Verwendung von elektrischen Stellelementen vorteilhaft, wenn die Anzahl der benötigten Antriebe bzw. Stellelemente gering ist.

Auf beiden Seiten des Bewegungskanals für den Schwenkarm und den Arbeitsarm und an diesen angrenzend sind zwei Bewegungskanäle angeordnet, die die Bewegungen von mindestens zwei Gestängen zur Befestigung und zum Verschieben von verschiebbaren Gewichten ermöglichen. Seitlich angrenzend zu den Bewegungskanälen der Gestänge, also in Richtung der Fahrzeugquerachse jeweils ganz außen, sind je Seite mindestens ein Bewegungskanal angeordnet, der die Bewegungen von mindestens jeweils einem verschiebbaren Gewicht ermöglicht. Bei diesem Ausführungsbeispiel werden also zwei verschiebbare Gewichte verwendet. Falls alle Antriebe der Arbeitsmaschine elektrische Antriebe sind, wird neben elektrischen Energiespeicher kein weiterer Bauraum benötigt, wie zum Beispiel für Öltanks, Pumpen und Ventile. Elektrische Energiespeicher können auf einfache Weise auf zwei voneinander entfernte Räume aufgeteilt werden, ohne dass dadurch wesentliche bauliche Aufwände entstehen. Die Aufwände beschränken sich weitgehend auf die Verwendung elektrischer Kabelverbindungen.

Bei einem bevorzugten Ausführungsbeispiel sind die beiden verschiebbaren Gewichte an ihrem hinteren Ende fest miteinander verbunden. Dadurch können sie durch ein einziges Antriebselement bzw. ein einziges Stellelement bewegt werden. Dafür ist somit ein einziges Steuersignal ausreichend. Dadurch dass die Verbindung der beiden verschiebbaren Gewichte am hinteren Ende des Fahrzeugs angeordnet werden, werden dadurch die Bewegungen der Elemente der anderen Bewegungskanälen wie dem Schwenkarm und dem Arbeitsarm sowie der Gestänge nicht störend beeinflusst.

Eine erfindungsgemäße weitere Arbeitsmaschine umfasst ein weiteres Arbeitsgerät oder eine weitere Aufnahme für ein weiteres Arbeitsgerät. Weiterhin umfasst die erfindungsgemäße weitere Arbeitsmaschine genau eine weitere Hauptfahrzeugachse, wobei beidseitig an der weiteren Hauptfahrzeugachse weitere Räder angeordnet sind. Den beidseitig an der weiteren Hauptfahrzeugachse angeordneten weiteren Rädern ist jeweils eine separate weitere Antriebseinheit zugeordnet. Weiterhin umfasst die erfindungsgemäße weitere Arbeitsmaschine zumindest ein weiteres Hilfsrad, wobei das weitere Hilfsrad zumindest eine Einrichtung zur Lasterfassung umfasst.

Weiterhin umfasst die erfindungsgemäße weitere Arbeitsmaschine ein weiteres verschiebbares Gewicht, wobei die Position des weiteren verschiebbaren Gewichts über eine Steuerung so geregelt werden kann, dass die Last auf dem weiteren Hilfsrad innerhalb eines unteren und oberen Grenzwertes liegt. Weiterhin umfasst die erfindungsgemäße weitere Arbeitsmaschine zumindest eine Steuerung, wobei die Steuerung zumindest einen Regelkreis umfasst, der bei der Unterschreitung des unteren Grenzwerts die weiteren Antriebseinheiten so ansteuert, dass das anliegende Antriebsdrehmoment derart verändert wird, dass dadurch ein Umkippen des Fahrzeugs verhindert wird. Dazu sollen Fahrzeuge mit einem weiteren verschiebbaren Gewicht und einem weiteren verschiebbaren Arbeitsgerät verwendet werden.

Ein bevorzugtes Ausführungsbeispiel der erfindungsgemäßen weiteren Arbeitsmaschine weist somit zwei Fahrmodi auf. Im Fahrmodus Selbstbalancieren befindet sich das weitere Hilfsrad nicht auf dem Boden. Das Fahrzeug balanciert mithilfe von Neigungssensoren um die weitere Hauptfahrzeugachse und wird über die Höhe der Drehmomente und Drehzahlen der weiteren Räder an der weiteren Hauptfahrzeugachse sowie über die Positionsverschiebung des weiteren verschiebbaren Gewichts gesteuert. Im Fahrmodus des weiteren Hilfsrads hingegen, befindet sich das weitere Hilfsrad auf dem Boden und übernimmt eine Last, die durch Lastsensoren ermittelt wird und die durch eine Positionsverschiebung des weiteren verschiebbaren Gewichts innerhalb eines oberen und unteren Grenzwertes eingeregelt werden kann.

Die erfindungsgemäße weitere Arbeitsmaschine weist somit die Möglichkeit auf, die Hauptlast immer auf die weitere Hauptfahrzeugachse zu legen und die Last auf dem weiteren Hilfsrad in einem durch die Grenzwerte vorgebbaren Bereich zu halten. Durch die niedrige Last auf dem weiteren Hilfsrad bleibt die Wendigkeit der weiteren Arbeitsmaschine in diesem Fahrmodus ähnlich gut, wie im Fahrmodus Selbstbalancieren. Allerdings sind die Anforderungen an die Steuerung und die Regelbarkeit vor allem in schwierigem Gelände beim Selbstbalancieren höher. Dabei kann die Regelungsgeschwindigkeit, die das Fahrzeug zum Fahren auf zwei Rädern zur Verfügung hat, zu langsam sein. Die sich schnell verändernde Kräfte, die durch das weitere Arbeitsgerät auf die weitere Arbeitsmaschine einwirken können, oder Kräfte, die durch eine sehr unebene Fahrbahn stoßartig auf die weiteren Räder wirken können, sind besser beherrschbar, wenn das weitere Hilfsrad einen Anteil der Last übernimmt, auch wenn dieser Anteil deutlich geringer ist, als der der weiteren Räder der weiteren Hauptfahrzeugachse.

Weiterhin benötigt das Fahrzeug beim Balancieren in schwierigem Gelände oder beim Stehen auf zwei weiteren Rädern mehr Energie für die weiteren Antriebseinheiten. Für eine moderne ökologische weitere Arbeitsmaschine ist die optimale Nutzung der Energie eine wesentliche Anforderung. Somit eignet sich der Fahrmodus Selbstbalancieren für Fahrten auf ebener Fahrbahn und bei höheren Fahrgeschwindigkeiten. Der Vorteil liegt darin, dass das Fahrzeug im Fahrmodus Selbstbalancieren durch Fahrbahnunebenheiten keine Nickbeschleunigungen und Nickbewegungen erfährt. Der zusätzliche Energieverbrauch der weiteren Antriebseinheiten, der für das Balancieren benötigt wird, ist bei höheren Fahrgeschwindigkeiten gering. Der Fahrmodus Hilfsrad hingegen eignet sich für Fahrten auf unebener Fahrbahn, bei sich schnell ändernden Kräften, die zum Beispiel durch das weitere Arbeitsgerät auf die weitere Arbeitsmaschine einwirken können, beim langsamen Fahren und beim Stehen.

Um die Last auf dem weiteren Hilfsrad klein zu halten und so die Wendigkeit und Agilität der weiteren Arbeitsmaschine dennoch ähnlich hoch zu halten wie beim Fahren im Fahrmodus Selbstbalancieren, erfasst bei der erfindungsgemäßen weiteren Arbeitsmaschine ein Regelkreis in der Steuerung die Last auf dem weiteren Hilfsrad. Das kann durch Lastsensoren geschehen, die am weiteren Hilfsrad oder an einer weiteren Aufnahme für das weitere Hilfsrad angeordnet sind. Diese Last verändert sich mit dem Verschieben des weiteren verschiebbaren Gewichts. Dadurch, dass das weitere verschiebbare Gewicht weiter von der weiteren Hauptfahrzeugachse wegbewegt wird, nimmt die Last auf das weitere Hilfsrad zu. Wird es hingegen näher an die weitere Hauptfahrzeugachse herangeführt, nimmt diese Last ab. Somit ist der Regelkreis in der Lage, die Last auf das weitere Hilfsrad so zu verändern, dass diese sich innerhalb eines Bereichs befindet, der durch einen unteren und einen oberen Grenzwert gekennzeichnet ist.

Die Schnelligkeit dieses Regelkreises ist allerdings hauptsächlich dadurch begrenzt, dass das weitere verschiebbare Gewicht Zeit für die Verschiebung benötigt. Dafür müssen Reibungskräfte überwunden werden und ebenso die Trägheitskraft des weiteren verschiebbaren Gewichts, die der Verschiebekraft entgegenwirkt. Fährt die weitere Arbeitsmaschine zum Beispiel auf einer unebenen Fahrbahn und es wirken stoßartige Kräfte auf die weiteren Räder der weiteren Hauptfahrzeugachse, dann kann die Last auf dem weiteren Hilfsrad ebenso stoßartig abnehmen. Erreicht diese Last den Wert null, droht das Fahrzeug umzukippen, bevor diese Last durch ein Verschieben des weiteren verschiebbaren Gewichts erhöht werden kann. Dem kann entgegengewirkt werden, indem der untere Grenzwert für die Last hoch angesetzt ist. Damit stellt die Höhe des unteren Grenzwerts gleichermaßen eine Sicherheit gegen Umkippen des Fahrzeugs dar.

Bei der erfindungsgemäßen weiteren Arbeitsmaschine kann im Gegensatz zu den Arbeitsmaschinen aus dem Stand der Technik der untere Grenzwert sehr niedrig gewählt werden, da die weiteren Antriebseinheiten der weiteren Räder der weiteren Hauptfahrzeugachse bei einem schnellen Unterschreiten des unteren Grenzwerts zur Hilfe genommen werden, um ein Umkippen des Fahrzeugs zu vermeiden. Dadurch, dass hierfür weitere Antriebseinheiten gewählt werden, die ihr Drehmoment sehr schnell verändern können, wie das beispielsweise bei Elektromotoren der Fall ist, kann ein zusätzlicher, schnell wirkender Regelkreis geschaffen werden. Ähnlich wie der Regelkreis, der die Verschiebung des weiteren verschiebbaren Gewichts nutzt, um die Last auf dem weiteren Hilfsrad einzuregeln, wird bei dem zweiten Regelkreis die Veränderung der Drehmomente der weiteren Antriebseinheiten genutzt, um entweder ein Umkippen zu verhindern, wenn das weitere Hilfsrad sich bereits in der Luft befindet oder die Last am weiteren Hilfsrad sich stoßartig so schnell nach unten bewegt, dass die hierfür zu langsame Bewegung des weiteren verschiebbaren Gewichts die Unterschreitung des unteren Grenzwerts nicht verhindern kann. Mit dem zweiten Regelkreis kann somit die niedrige Regelgeschwindigkeit des ersten Regelkreises kompensiert werden und es kann ein Fahrzeug geschaffen werden, welches im Fahrmodus Hilfsrad betrieben werden kann, und somit auf unebener Fahrbahn dennoch sehr agil und wendig ist. Fährt die erfindungsgemäße weitere Arbeitsmaschine beispielsweise auf einer unebenen Fahrbahn in Vorwärtsrichtung, also in die Richtung der dem weiteren Hilfsrad entgegengesetzte Fahrzeugseite und hat ein im Wesentlichen gleichbleibendes Antriebsmoment an den weiteren Antriebseinheiten der weiteren Räder der weiteren Hauptfahrzeugachse anliegen, dann befindet sich das weitere verschiebbare Gewicht auf einer gleichbleibenden Position, die so eingeregelt ist, dass die Last auf dem weiteren Hilfsrad etwas oberhalb des unteren Grenzwerts liegt. Fährt diese weitere Arbeitsmaschine beispielsweise durch ein Schlagloch oder durch eine Mulde in der Fahrbahn, verringert sich die Last auf dem Hilfsrad stoßartig. Die Lastabnahme wird durch die Lastsensoren am weiteren Hilfsrad erfasst und an die Steuerung gemeldet. Das weitere verschiebbare Gewicht wird unmittelbar beschleunigt und bewegt sich nach hinten.

Angaben wie vorne, hinten, oben und unten richten sich nach der regelgerecht eingesetzten weiteren Arbeitsmaschine, die unten auf dem Boden steht und beispielsweise das weitere Arbeitsgerät vom Boden weg hoch hebt und vorwärts nach vorne fährt und rückwärts nach hinten fährt.

Allerdings kann das weitere Hilfsrad dennoch vom Boden abheben. Durch den zweiten Regelkreis wird dann den bereits anliegenden Antriebsmomenten der weiteren Antriebseinheiten, deren Höhe von den vorausgegangenen Fahrwiderständen abhängig ist, ein zusätzliches Antriebsmoment überlagert. Durch das höhere Antriebsmoment erfährt die weitere Arbeitsmaschine eine Beschleunigung nach vorne. Dabei entsteht ein Reaktionsmoment an den weitere Antriebseinheiten, welches auf die weitere Arbeitsmaschine in die Richtung einwirkt, in der die weitere Arbeitsmaschine nach Hinten kippen möchte, beziehungsweise, in der das weitere Hilfsrad nach unten gedrückt wird. Somit kann das Umkippen der weiteren Arbeitsmaschine nach vorne verhindert werden.

Für diesen zweiten Regelkreis können zusätzlich zur den Lastsensoren für die Last auf dem weiteren Hilfsrad auch die Neigungssensoren verwendet werden, die für den Regelkreis der Selbstbalancierung vorgesehen sind. Diese erkennen die Kippbewegung des Fahrzeugs, wenn das weitere Hilfsrad bereits vom Boden abgehoben ist. Sie erkennen auch, ob sich das Fahrzeug durch das höhere Antriebsmoment wiederaufrichtet, oder ob das überlagerte Drehmoment noch weiter erhöht werden muss. Somit sind Neigungssensoren zusammen mit den weiteren Antriebseinheiten Teil des Regelkreises im Fahrmodus Hilfsrad.

Fährt das erfindungsgemäße Fahrzeug beispielsweise rückwärts, also in die Richtung des weiteren Hilfsrads und liegt dabei ein Drehmoment in diese Fahrtrichtung vor, welches von den Fahrwiderständen abhängt, dann muss beim Durchfahren eines Schlaglochs dieses Antriebsmoment ebenfalls verändert werden, um ein Umkippen zu vermeiden. In diesem Falle wird das bestehende Antriebsmoment aber abgesenkt, um denselben Effekt zu erhalten, wie bei der Vorwärtsfahrt.

Bei einem bevorzugten Ausführungsbeispiel der erfindungsgemäßen weiteren Arbeitsmaschine wird dieses überlagerte Drehmoment, welches das Umkippen des Fahrzeugs verhindert, nur solange angelegt, bis sich die Last auf dem weiteren Hilfsrad wieder oberhalb des unteren Grenzwerts befindet. Da sich bei der Erkennung einer Unterschreitung dieses Grenzwerts auch gleichzeitig das weitere verschiebbare Gewicht nach hinten verschiebt, kann die Zeitdauer des überlagerten Drehmoments kurz gehalten werden. Somit wird ein übermäßiges Beschleunigen der Fahrzeuggeschwindigkeit vermieden. Ebenso können für die Bestimmung des Zeitpunkts, an dem das überlagerte Drehmoment wieder rückgängig gemacht wird auch die Lagesensoren zu Hilfe genommen werden, die anzeigen können, dass das Fahrzeug sich wieder soweit aufgerichtet hat, dass sich das weitere Hilfsrad wieder auf dem Boden befindet. Hebt also das weitere Hilfsrad vom Boden ab bzw. hoch, wird dieses durch das überlagerte Drehmoment wieder zurück auf den Boden geführt. Das Fahrzeug fährt also nur kurz auf zwei weiteren Rädern und wird umgehend wieder in den Fahrmodus Hilfsrad zurückgeführt, bei dem das weitere Hilfsrad mit geringer Last auf dem Boden aufsteht. Das immer wiederkehrende Zurückführen des weiteren Hilfsrads auf den Boden wird solange vorgenommen, wie der Steuerung ein Signal vorliegt, welches das Fahrzeug im Modus Hilfsrad mit geringer Last halten soll, welches also den Fahrmodus Hilfsrad ausgewählt hat.

Liegt nun das entsprechende Signal anders vor, nämlich dass ein Wechsel in den Fahrmodus Selbstbalancieren erfolgen soll, wird die Last am weiteren Hilfsrad durch eine Verschiebung des weiteren verschiebbaren Gewichts solange reduziert, bis sie bei Null angelangt ist. Gleichzeitig wird nun der Regelkreis eingeschaltet, der für das Selbstbalancieren unter Verwendung der Neigungssensoren benötigt wird.

Bei einem weiteren bevorzugten Ausführungsbeispiel der erfindungsgemäßen weiteren Arbeitsmaschine sind der untere und der obere Grenzwert veränderbar. Diese können beispielsweise je nach Fahrbahnbeschaffenheit oder nach Einsatzfall anders gewählt werden. Die Festlegung der Grenzwerte kann entweder durch einen Bediener vorgenommen werden, der dies entweder über ein Steuerelement am Fahrzeug macht oder über eine Fernbedienung. Oder die Veränderung der Grenzwerte kann auch durch automatische Funktionen erfolgen, die auf eine Optimierung der jeweiligen Fahrsituation ausgelegt sind. In einem weiteren bevorzugten Ausführungsbeispiel wir zur automatischen Optimierung der Grenzwerte die Fahrgeschwindigkeit herangezogen. Bei einem weiteren Ausführungsbeispiel ist das weitere Hilfsrad am weiteren verschiebbaren Gewicht angeordnet. Daraus ergibt sich der Vorteil, dass sich die Last auf dem weiteren Hilfsrad nicht deutlich erhöht, wenn das weitere verschiebbare Gewicht weit nach Hinten ausgefahren ist. Es kann aber genauso am hinteren Teil des weiteren Fahrzeugrahmens angeordnet sein.

In einem weiteren Ausführungsbeispiel sollen dazu Fahrzeuge mit verschiebbaren Gewichten verwendet werden. Diese sollen in einem ausreichend weiten Bereich verschoben werden können und somit den Fahrzeugschwerpunkt in einem idealen Bereich zu halten. Die Verschiebung soll ohne großen Energieverlust möglich sein. Weiterhin soll die Verschiebung einfach steuerbar sein. Sie soll annähernd parallel zur Fahrzeuglängsachse des Fahrzeugs verlaufen. Die Verschiebeeinrichtung soll einfach, kostengünstig und robust sein und beim Verschieben keinen übermäßigen Verschleiß an den verwendeten Bauteilen verursachen.

Eine erfindungsgemäße dritte Arbeitsmaschine umfasst ein drittes Arbeitsgerät oder eine dritte Aufnahme für ein Arbeitsgerät. Weiterhin umfasst die erfindungsgemäße dritte Arbeitsmaschine eine oder mehrere dritte Fahrzeugachsen, wobei beidseitig an den dritten Fahrzeugachsen dritte Radelemente und/oder Raupenelemente angeordnet sind. Weiterhin umfasst die erfindungsgemäße dritte Arbeitsmaschine zumindest ein drittes verschiebbares Gewicht, wobei die Position des dritten verschiebbaren Gewichts so verschiebbar ist, dass damit der Fahrzeugschwerpunkt verschoben werden kann. Weiterhin umfasst die erfindungsgemäße dritte Arbeitsmaschine mindestens ein Gestänge zur Befestigung und zur Führung des dritten verschiebbaren Gewichts, welches mindestens drei Stangen umfasst, wobei eine erste Stange über einen ersten Gelenkpunkt und eine zweite Stange über einen zweiten Gelenkpunkt drehbar am Fahrzeug/Fahrzeugrahmen angeordnet sind und eine dritte Stange durch einen dritten Gelenkpunkt drehbar mit der erste Stange und einem vierten Gelenkpunkt drehbar mit der zweiten Stange verbunden ist. Dabei ist das verschiebbare Gewicht über einen fünften Gelenkpunkt drehbar oder fest an der dritten Stange angeordnet.

Die ersten vier Gelenkpunkte sind so angeordnet, dass sie über ihre Verbindungslinien ein Mehreck mit mindestens vier Seiten bilden. Die drei Gelenkpunkte der dritten Stange sind durch eine erste Verbindungslinie und eine zweite Verbindungslinie miteinander verbunden, die in einem festen Winkel von mehr als 90° zueinanderstehen. Die Positionen der Gelenkpunkte der ersten und der zweiten Stange am Fahrzeug/Fahrzeugrahmen, die Länge der Verbindungslinie der ersten Stange, die Länge der Verbindungslinie der zweiten Stange, der feste Winkel und die Längen der Verbindungslinien der drei Gelenkpunkte auf der dritten Stange sind so angeordnet, dass die dritte Stange das dritte verschiebbare Gewicht beim Verschieben auf einer gegenüber dem Fahrzeug fest zugeordneten im Wesentlichen geraden Linie führt.

Eine erfindungsgemäße dritte Arbeitsmaschine weist somit im Gegensatz zu einer Arbeitsmaschine aus dem Stand der Technik ein drittes verschiebbares Gewicht auf, welches in einem sehr weiten Bereich verschiebbar ist, wobei das Verschieben auf einer geraden Linie erfolgt. In einem bevorzugten Ausführungsbeispiel wird das dritte verschiebbare Gewicht mit nur einem einzigen Antrieb/Stellelement angetrieben, welches zum Verschieben im Wesentlichen nur die Kräfte überwinden muss, welche zu Beschleunigen und Verzögern des dritten verschiebbaren Gewichts notwendig sind. Der Verschiebeweg in horizontaler Richtung wird durch zwei Stangen erzeugt, die durch Gelenke drehbar gelagert sind, sodass sich die beiden Verschiebewege in horizontaler Richtung summieren. Somit erreicht dieser Verschiebeweg eine wesentliche Länge. Auf diese Weise kann der Schwerpunkt des Fahrzeuges in einem für die Stabilität des Fahrzeugs günstigen Bereich gehalten werden, auch wenn über das Arbeitsgerät sehr dynamische Kräfte auf das Fahrzeug einwirken. Durch den großen Verschiebeweg kann das dritte verschiebbare Gewicht mit einem größeren Hebelarm diesen Kräften entgegenwirken und kann somit dieselbe Wirkung erzeugen, wie das bei den fest angebrachten, und zum Teil deutlich schwereren Gegengewichten der Arbeitsmaschinen aus dem Stand der Technik der Fall ist.

Die durch die Schwerkraft auf das dritte verschiebbare Gewicht wirkenden Kräfte, die durch dynamische Fahrzustände noch erhöht werden können, müssen durch die Gelenkpunkte auf das Fahrzeug übertragen werden. Bei der erfindungsgemäßen dritten Arbeitsmaschine werden diese Kräfte ausschließlich durch einfache Gelenke übertragen, die durch eine einfache Verdrehung, zum Beispiel durch die Verwendung von Bolzen, die notwendigen Bewegungen zulassen, um das Gewicht zu verschieben. Solche Gelenke können in ihrer Bauart sehr robust ausgeführt werden. Sie sind gut vor Staub und Schmutzeinträgen schützbar, sind wartungsarm und sie können eine lange Dauerhaltbarkeit gewährleisten. Sie verursachen zudem auch bei der Übertragung hoher Lasten nur vergleichsweise geringe Reibungsverluste. Diese können noch weiter reduziert werden, wenn Gleitbuchsen oder Wälzlager verwendet werden.

In einem bevorzugten Ausführungsbeispiel ist das Gestänge so angeordnet, dass es das dritte verschiebbare Gewicht auf einer Linie führt, die im Wesentlichen parallel zur Fahrzeuglängsachse angeordnet ist. Dadurch ergibt sich der Vorteil, dass das Gewicht weit verschoben werden kann, ohne dass es sich dabei dem Boden nähert, wodurch die Bodenfreiheit beeinträchtigt werden würde, beziehungsweise ohne dass es weit nach oben angehoben werden muss, wodurch unnötig viel Energie verbraucht werden würde und wodurch sich der Fahrzeugschwerpunkt in eine höhere für das Fahrzeug ungünstigere Lage verschieben würde. In einem weiteren Ausführungsbeispiel kann diese Linie aber auch so angeordnet sein, dass zusätzlich zum Verschieben des dritten verschiebbaren Gewichts parallel zur Fahrzeuglängsachse, wodurch eine Verschiebung des Fahrzeugschwerpunkts parallel zur Fahrzeuglängsachse bewirkt wird, gleichzeitig eine vertikale Bewegungskomponente eingeschlossen ist.

In einem bevorzugten Ausführungsbeispiel ist es durch die Lage und die Länge des Verschiebewegs des dritten verschiebbaren Gewichts möglich, den Fahrzeugschwerpunkt immer genau über einer einzigen dritten Fahrzeugachse einzuregeln, sodass sich diese Maschine auf diese Weise selbst balancieren kann. Dadurch wird es möglich, das Fahrzeug mit den dritten Rädern dieser Achse zu lenken, indem die dritten Räder mit unterschiedlichen Drehzahlen oder gar mit unterschiedlichen Drehrichtungen angetrieben werden. Solche Maschinen sind also sehr wendig und agil betreibbar.

In einem weiteren Ausführungsbeispiel umfasst das Gestänge eine vierte Stange, die an einem Ende durch einen weiteren Gelenkpunkt drehbar mit dem verschiebbaren Gewicht verbunden ist und am anderen Ende durch einen weiteren Gelenkpunkt drehbar mit der zweiten Stange. Dabei weist die zweite Stange einen dritten Gelenkpunkt auf, wobei die drei Gelenkpunkte der zweiten Stange durch eine erste Verbindungslinie und eine zweite Verbindungslinie verbunden sind, die in einem festen Winkel von mehr als 90° zueinanderstehen. Dabei sind die Positionen der beiden Gelenkpunkte am verschiebbaren Gewicht, die Länge der dritten Stange (darunter sind die Verbindungslinien der Gelenkpunkte zu verstehen), die Länge der vierten Stange, der feste Winkel und die Länge der Verbindungslinie der zweiten Stange so angeordnet, dass die vierte Stange das dritte verschiebbare Gewicht beim Verschieben in einer im Wesentlichen horizontalen Lage hält. Dadurch ergibt sich der Vorteil, dass sich die horizontale Lage des dritten verschiebbaren Gewichts bei einem Verschieben entlang der Fahrzeuglängsachse nicht verändert. Somit kann das verschiebbare Gewicht Komponenten umfassen, wie zum Beispiel Motoren zur Energieumwandlung, hydraulische Pumpen, Flüssigkeitsbehälter und/oder weitere Speicher-, Antriebs- oder Steuerungselemente, die störungsfrei arbeiten können und deren Funktion nicht durch eine etwaige Schrägstellung beeinträchtigt werden können.

In einem bevorzugten Ausführungsbeispiel ist das dritte verschiebbare Gewicht mit zwei Gestängen mit dem Fahrzeug verbunden, wobei diese derartig an zwei Seiten des Gewichts angeordnet sind, dass das dritte verschiebbare Gewicht zwischen diesen Gestängen Platz hat und zwischen ihnen verschoben werden kann. Dadurch ergibt sich der Vorteil, dass zwischen den beiden Gestängen eine Art Fahrgasse frei bleibt, in welchem das dritte verschiebbare Gewicht sich hin und her bewegen lässt. Dabei kann sich das dritte verschiebbare Gewicht in der Fahrzeuglängsachse in einem Bereich bewegen, in welchem die Stangen mit dem Fahrzeug verbunden sind. Der Vorteil liegt darin, dass somit sehr kurze und kompakte Fahrzeuge entstehen können.

In einem besonders bevorzugten Ausführungsbeispiel umfassen die Gelenke der Gestänge Gleitbuchsen oder Wälzlager, die die Reibungskräfte reduzieren, die beim Verschieben des dritten verschiebbaren Gewichts in den Lagerstellen der Gelenke entstehen. Somit kann das Verschieben bei hoher Dynamik schnell und ohne übermäßig hohen Energieverbrauch erfolgen.

In einem weiteren Ausführungsbeispiel umfasst die dritte Arbeitsmaschine ein Steuergerät, wobei die Steuerung zumindest einen elektronischen Regelkreis umfasst und damit die Position des dritten verschiebbaren Gewichts steuert. Diese Steuerung kann zum Beispiel auch Neigungssensoren umfassen.

In einem weiteren Ausführungsbeispiel umfasst die dritte Arbeitsmaschine Sensoren, die die Position des dritten verschiebbaren Gewichts erfassen. Diese kann zum Beispiel in einem elektronischen Steuergerät ausgewertet werden und zur Steuerung beziehungsweise zur Regelung der idealen Position des Gewichts und somit zur idealen Position des Fahrzeugschwerpunkts verwendet werden. Solche Sensoren können Linearsensoren sein oder Winkelsensoren, die beispielsweise einen Winkel zwischen zwei Stäben an einem Gelenkpunkt erfassen.

In einem weiteren Ausführungsbeispiel umfasst die dritte Arbeitsmaschine Sensoren, die das Gewicht des dritten verschiebbaren Gewichts erfassen. Dadurch können einem elektronischen Steuergerät Lastdaten zur Verfügung gestellt werden, die zum Beispiel dadurch veränderlich sind, dass sich die Gewichte von Elementen verändern, die sich innerhalb des dritten verschiebbaren Gewichts befinden. Zum Beispiel können das Brennstofftanks sein, oder Tanks mit Hydraulikflüssigkeit.

In einem weiteren Ausführungsbeispiel erfolgt die Verschiebung durch einen Antrieb/Stellelement, der zum Beispiel ein Hydraulikzylinder oder ein elektrischer Linearantrieb sein kann, oder ein elektrisches Stellelement, welches an einem Gelenkpunkt angeordnet ist, wie zum Beispiel ein elektrischer Motor mit einem Untersetzungsgetriebe.

In einem typischen Ausführungsbeispiel umfasst das dritte verschiebbare Gewicht der erfindungsgemäßen dritten Arbeitsmaschine einen Energiespeicher und/oder einen Motor zur Energieumwandlung. Bei einem Motor zur Energieumwandlung kann es sich beispielsweise um einen Verbrennungsmotor handeln, wie er aus dem Stand der Technik bekannt ist. Weiterhin sind dadurch auch weitere bekannte Vorrichtungen zur Energieumwandlung, wie beispielsweise Hydraulikpumpen mitumfasst. Bei dem Energiespeicher kann es sich beispielsweise um Akkumulatoren zur Speicherung elektrischer Energie handeln. Die durch den Energiespeicher und/oder den Motor zur Energieumwandlung bereitgestellte Energie kann neben dem Fahrantrieb auch für Hydraulikmotoren und/oder Pumpen zur Steuerung der Verschiebung des Gewichts genutzt werden oder für die Bewegungen des dritten Arbeitsgeräts. Dadurch ergibt sich der Vorteil, dass das Gewicht zum Beispiel eines Energiespeichers beim Verschieben des verschiebbaren Gewichts gleichzeitig zur Verschiebung des Schwerpunkts dient. Somit können vergleichsweise leichte Fahrzeuge entstehen.

In einem bevorzugten Ausführungsbeispiel der erfindungsgemäßen dritten Arbeitsmaschine kann an dem dritten verschiebbaren Gewicht ein Hilfsrad angeordnet sein. Der Vorteil eines solchen Hilfsrads ist, dass dadurch beispielsweise Lastspitzen abgefangen werden können. Solche Lastspitzen können beispielsweise entstehen, wenn die dritte Arbeitsmaschine als Arbeitsgerät eine Schaufel zum Abbrechen von Material, beispielsweise in einer Steinbruchwand, genutzt wird oder bei einem Entladen der Schaufel, wenn die Last an der Schaufel durch das Herausfallen von Ladegut schlagartig geringer wird. Hierfür kann das Hilfsrad in einem Ausführungsbeispiel als zusätzlicher Abstützelement genutzt werden, indem durch die Steuerung zugelassen wird, dass auf dem Hilfsrad ebenfalls eine geringe Last anliegen darf, sodass der Schwerpunkt kurzzeitig (insbesondere bei einem Beladevorgang) außerhalb der dritten Fahrzeugachse zu dem dritten verschiebbaren Gewicht hin verschoben liegen darf. Zudem kann durch das Hilfsrad verhindert werden, dass das dritte verschiebbare Gewicht durch die schlagartige Verschiebung des Schwerpunkts (beispielsweise beim Entladen der Schaufel) der dritten Arbeitsmaschine auf den Boden aufschlägt oder bei einer solchen schlagartig erforderlichen Positionsverschiebung, auf dem Boden schleift. Somit ist ein Vorteil des Hilfsrades, dass dieses insbesondere beim Beladen und Entladen, bei dem es zu schlagartigen Lastspitzen und daraus resultierenden Schwerpunktverschiebungen kommen kann, als zusätzlicher Abstützpunkt für die dritte Arbeitsmaschine genutzt werden kann. Dabei ist jedoch zu beachten, dass die Hauptlast stets von der dritten Fahrzeugachse getragen werden soll, so dass das Hilfsrad und dessen Lagerung/Aufhängung in und/oder an dem Gegengewicht lediglich für geringe Lasten dimensioniert werden muss. Weiterhin kann das Hilfsrad beispielsweise ein Aufsetzen des verschiebbaren Gewichts auf dem Boden bei einer Notbremsung der dritten Arbeitsmaschine verhindern, bei der das dritte verschiebbare Gewicht der dritten Arbeitsmaschine schlagartig entgegen einer Fahrtrichtung der dritten Arbeitsmaschine bewegt werden muss. In einem weiteren Ausführungsbeispiel ist das Arbeitsgerät mit der dritten Arbeitsmaschine über eine Aufnahme gekoppelt, welche um die Fahrzeughochachse verdreht werden kann und welche damit eine Lenkbewegung des Fahrzeugs zulässt. Aus dem Stand der Technik sind Fahrzeuge bekannt, welche an- und abkoppelbare Arbeitsgeräte aufnehmen können. Im abgekoppelten Zustand fährt und lenkt die dritte Arbeitsmaschine durch geeignete Einrichtungen, zum Beispiel, indem eine Achse lenkbare Räder besitzt. Oder es kann selbstbalancieren und über unterschiedliche Drehzahlen der Räder an der Hauptachse lenken. Sind Raupenantriebe an beiden Seiten einer Hauptachse angeordnet, lenkt das Fahrzeug ebenfalls über unterschiedliche Antriebsdrehzahlen und es steht auf den Raupenantrieben stabil und benötigt somit keine Balancierungsmittel. Ist an einem solchen Fahrzeug ein Arbeitsgerät über eine drehbare Aufnahme angekoppelt, wobei das Arbeitsgerät Einrichtungen zur Spureinhaltung, wie zum Beispiel Räder besitzt, dann erfolgt die Lenkung über dieses Drehgelenk. Aus dem Stand der Technik sind solche Lenkeinrichtungen zum Beispiel bei knickgelenkten Muldenkipper bekannt, oder bei knickgelenkten Radladern. Spureinhaltende Einrichtungen können aber auch Arbeitsgeräte sein, die, solange sie im Arbeitseingriff sind, mittels Pflugscharen oder Erdbearbeitungszinken seitlich stabil geführt werden. Umfassen solche Fahrzeuge ein drittes verschiebbares Gewicht, kann beispielsweise der Schwerpunkt dieser dritten Arbeitsgeräte so eingestellt werden, dass nur eine angetriebene Achse verwendet wird, wobei dieses Fahrzeug dieselbe Traktionsfähigkeit besitzt, wie Fahrzeuge aus dem Stand der Technik, die zwei oder mehr angetriebene Achsen besitzen. Durch das verschiebbare Gewicht kann die Lage des Schwerpunkts nahe an der angetriebenen Achse eingeregelt werden, wobei diese Achse das gesamte zur Erzeugung von Traktion verfügbare Gewicht trägt. Ist diese Aufnahme so beschaffen, dass es Bewegungen um die Fahrzeughochachse zulässt, Bewegungen um die Fahrzeugquerachse aber nicht, dann kann auch eine Kraft, die am Arbeitsgerät nach unten wirkt, beispielsweise hervorgerufen durch die Bodenbearbeitungseinrichtungen wie zum Beispiel Pflugscharen, auf die angetriebene Achse geführt werden, indem das verschiebbare Gewicht in die dem Arbeitsgerät abgewandte Seite verschoben wird.

Aus dem Stand der Technik sind Pflüge bekannt, die an dem zum Traktor abgewandten Seite ein angetriebenes Rad besitzen. Dieses Rad bezieht die Energie mittels hydraulischem Drucköl oder mittels elektrischen Stroms vom Traktor. Damit kann die Kraft, die auf die Pflugscharen nach unten wirkt, durch dieses angetriebene Rad zur Erzeugung einer Vortriebskraft genutzt werden, die den Traktor somit beim Ziehen des Pfluges hilft. Besitzt ein Traktor ein verschiebbares Gewicht, kann dieselbe Zugkraft mithilfe der einzig angetriebenen Hauptachse erzeugt werden und die Antriebseinrichtung am Pflug kann eingespart werden.

Über diese Aufnahme können in einem weiteren Ausführungsbeispiel auch Anhänger an die erfindungsgemäße dritte Arbeitsmaschine angekoppelt werden, sodass die Lenkfunktion dieses Fahrzeuges über das Drehgelenk stattfindet. Auch solche Fahrzeuge können über das dritte verschiebbare Gewicht die Last des Anhängers zur Erzeugung von Zugkraft an der Hauptachse der dritten Arbeitsmaschine nutzen. Aus dem Stand der Technik sind Anhänger bekannt, die eine angetriebene Achse besitzen und so die Anhängerlast zur Zugkrafterzeugung nutzen. Der vorgespannte Traktor kann damit leichter gebaut werden, bei gleichen Fahrleistungen. Durch das verschiebbare Gewicht kann bei den erfindungsgemäßen dritten Arbeitsmaschinen auf eine solche angetriebene Anhängerachse verzichtet werden.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
- Figur 1: eine Arbeitsmaschine in Form eines Radladers mit Hubrahmen aus dem Stand der Technik;
- Figur 2: eine schematische Darstellung einer Arbeitsmaschine mit verschiebbarem Gewicht, Schwenkarmen und Arbeitsarmen aus dem Stand der Technik;
- Figur 3a bis 3c: eine schematische Darstellung eines Ausführungsbeispiels einer erfindungsgemäßen Arbeitsmaschine;
- Figur 4: eine schematische Darstellung eines Ausführungsbeispiels einer erfindungsgemäßen Arbeitsmaschine;
- Figur 5: eine schematische Darstellung eines weiteren Ausführungsbeispiels einer erfindungsgemäßen Arbeitsmaschine; und
- Figur 6a bis 6c: eine schematische Darstellung eines Ausführungsbeispiels einer erfindungsgemäßen Arbeitsmaschine.

### Ausführungsbeispiel

In Figur 1 ist ein Radlader 50.1 dargestellt, der einer Arbeitsmaschine/einem Fahrzeug aus dem Stand der Technik entspricht, der zwei Achsen aufweist, und ein Arbeitsgerät 52 in Form einer Schaufel. Weiterhin umfasst der Radlader 50.1 einen Hubrahmen 53, der an einem Ende mit dem Fahrzeugrahmen 55 durch die Gelenke 54 drehbar verbunden ist und an dessen gegenüberliegenden Ende das Arbeitsgerät 52 angeordnet ist. Am hinteren Ende ist ein Gegengewicht 51 fest angeordnet. Nachteilig an solchen Radlader ist, dass sie ein hohes Eigengewicht im Vergleich zu ihrer Nutzlast aufweisen. Außerdem benötigen sie viel Platz zum Wenden, vorgegeben durch ihre Länge und der Einschränkungen, die die Knicklenkungen mit sich bringen.

In Figur 2 ist ein Radlader 50.2 dargestellt, der einer Arbeitsmaschine/einem Fahrzeug aus dem Stand der Technik entspricht. Der Radlader 50.2 umfasst nur eine Hauptfahrzeugachse 56, an der beidseitig Radelemente 57 angeordnet sind. Den Radelementen 57 sind jeweils separate Antriebseinheiten zugeordnet, durch die über eine Steuerung eine Selbstbalancierung des Radladers 50.2 um die Hauptfahrzeugachse 56 bewirkt wird. Über die separaten Antriebseinheiten wird der Radlader 50.2 zudem gelenkt, wobei er somit auf der Stelle drehen kann. Weiterhin umfasst der Radlader 50.2 als Arbeitsgerät 52 eine Schaufel, welche über die Schwenkarme 60 und Arbeitsarme 61 mit dem Fahrzeugrahmen 55 verbunden ist. Auf der dem Arbeitsgerät 52 abgewandten Fahrzeugseite weist die Arbeitsmaschine 50.2 ein verschiebbares Gewicht 59 auf, mit welchem der Fahrzeugschwerpunkt verschoben werden kann und welcher somit über der Hauptfahrzeugachse 56 eingependelt werden kann. Durch eine Verschiebung des verschiebbaren Gewichts 59 kann das Fahrzeug im Selbstbalancierungsmodus in seinen Bewegungsrichtungen gesteuert werden. Am verschiebbaren Gewicht 59 ist ein selbst- gelenktes Hilfsrad 58 angeordnet. Dieses kann eine Last aufnehmen, solange sich das Fahrzeug außerhalb des Selbstbalancierungsmodus befindet. Die Last auf dem Hilfsrad 58 wird durch eine Verschiebung des verschiebbaren Gewichts 59 verändert, wobei diese idealerweise kleiner ist, als die Last auf der Hauptfahrzeugachse 56. So kann sichergestellt werden, dass die Radelemente 57 der Hauptfahrzeugachse 56 stets einen hohen Anpressdruck auf den Boden haben und somit genügend Traktion erzeugen können. Der Radlader 50.2 umfasst zwei Hebel 62.1 und 62.2, über die das verschiebbare Gewicht 59 mit dem Fahrzeugrahmen 55 verbunden ist und über die die Verstellung der Position des verschiebbaren Gewichts 59 erfolgt.

Zwei Schwenkarme 60 und zwei Arbeitsarme 61 sind jeweils auf beiden Fahrzeugseiten so angeordnet, dass das Arbeitsgerät 52 nach hinten gezogen werden kann, um somit die Stabilität des Fahrzeugs gegen ein Umkippen nach vorne zu gewährleisten. Allerdings wir dabei derselbe Bauraum beansprucht, den auch das verschiebbare Gewicht benötigt, um weit an die Hauptfahrzeugachse herangezogen zu werden.

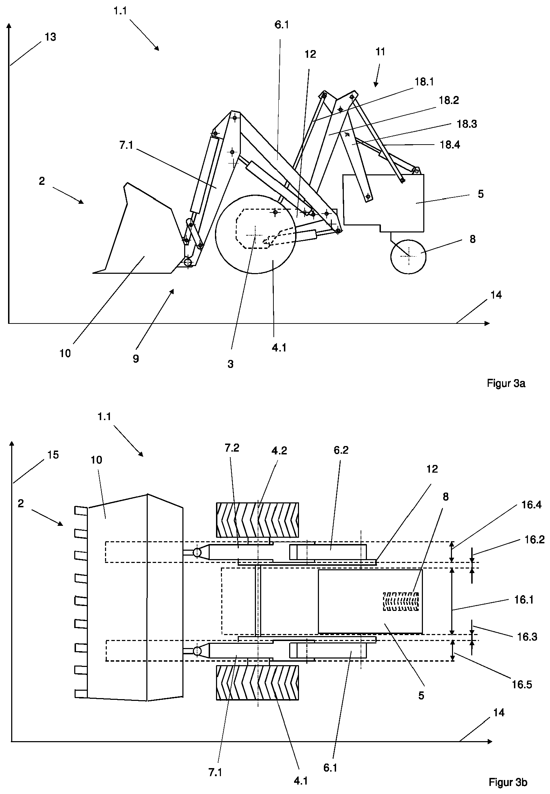

In Figur 3a ist eine bevorzugte erfindungsgemäße Arbeitsmaschine 1.1 dargestellt, die die Nachteile der Arbeitsmaschinen aus dem Stand der Technik beseitigt oder zumindest minimiert. Die erfindungsgemäße Arbeitsmaschine 1.1 umfasst ein Arbeitsgerät 2, das über die Aufnahme 9 mit dem Fahrzeug verbunden ist. Über die Aufnahme 9 kann das Arbeitsgerät 2 für den Transport angehoben werden. Bei dem dargestellten Arbeitsgerät 2 handelt es sich um eine Schaufel 10, wie sie bei Radladern eingesetzt wird. Als Arbeitsgerät 2, das an der Aufnahme 9 angeordnet ist, sind aber sämtliche Arbeitsgeräte denkbar, die im Bauwesen und/oder in der Landwirtschaft genutzt werden und die ein Trägerfahrzeug benötigen. Außerdem umfasst die Arbeitsmaschine 1.1 mindestens eine Hauptfahrzeugachse 3 mit beidseitig angeordneten Radelementen 4 und/oder Raupenelementen.

Die erfindungsgemäße Arbeitsmaschine 1.1 kann als Roboter verwendet werden. Dabei arbeitet die Maschine fahrerlos, also ferngesteuert und/oder autonom. Roboter, wie sie zum Beispiel in der Landwirtschaft eingesetzt werden, sind oft leichter und kleiner als die Arbeitsmaschinen, wie sie heute meistens verwendet werden. Dadurch, dass mehrere solcher Roboter zur Verrichtung der Arbeiten einer einzigen Arbeitsmaschine eingesetzt werden, und dadurch, dass sie schneller und agiler sind, können sie kleiner und leichter sein und dennoch dieselbe Leistung erbringen. Vorteilhaft sind ihre niedrigeren Herstellkosten und niedrigeren Betriebskosten sowie die wendige und agile Fahrweise.

Weiterhin umfasst die erfindungsgemäße Arbeitsmaschine 1.1 ein verschiebbares Gewicht 5, das über ein Gestänge 11 mit dem Fahrzeugrahmen 12 verbunden ist. Dabei ist das Gestänge 11 so angeordnet, dass das verschiebbare Gewicht 5 in einem weiten Bereich verschoben werden kann, so dass dieses sehr nahe an die Hauptfahrzeugachse 3 herangeführt werden kann und dass das Fahrzeug somit sehr kompakt ist. Durch den weiten Verschiebebereich kann das verschiebbare Gewicht 5 vergleichsweise klein sein und dennoch über die Hebelwirkung das Gewicht eines schweren Arbeitsgeräts 2 ausgleichen, wenn dieses angehoben wird, ohne dass das Fahrzeug seine stabile Lage verliert. Das Gestänge 11 besteht aus den Stangen 18.1, 18.2, 18.3 und 18.4. Diese Stangen führen das verschiebbare Gewicht entlang der Fahrzeuglängsachse 14 auf einer im Wesentlichen geraden Linie. Beim Verschieben wird wenig Energie aufgewendet, da der Antrieb im Wesentlichen nur die Beschleunigungsenergie für das verschiebbare Gewicht aufbringen muss.

Bei einem bevorzugten Ausführungsbeispiel der erfindungsgemäßen Arbeitsmaschine 1.1 umfasst das verschiebbare Gewicht 5 Elemente, wie zum Beispiel Energiewandler, elektrische Batterien oder Hydraulikanlagen zur Versorgung der Hydraulikzylinder.

Weiterhin besitzt die erfindungsgemäße Arbeitsmaschine 1.1 Schwenkarme 6.1 und 6.2, die drehbar am Fahrzeugrahmen 12 angeordnet sind. An den Schwenkarmen 6.1 und 6.2 sind ebenfalls drehbar Arbeitsarme 7.1 und 7.2 angeordnet, welche eine Aufnahme 9 umfassen, an die ein Arbeitsgerät 2 angeordnet werden kann.

In Figur 3b ist die erfindungsgemäße Arbeitsmaschine 1.1 in einer weiteren Ansicht dargestellt. Um das verschiebbare Gewicht 5 entlang der Fahrzeuglängsachse 14 weit an den Bereich der Hauptfahrzeugachse 3 heranziehen zu können, ohne dabei durch andere Elemente im Fahrzeug behindert zu werden, wird dem verschiebbaren Gewicht 5 ein erster Bewegungskanal 16.1 zugeordnet. In dem ersten Bewegungskanal 16.1 befinden sich keine anderen Elemente, unabhängig von deren Bewegungen beziehungsweise deren Positionen. Das verschiebbare Gewicht 5 und damit der diesem zugeordneten ersten Bewegungskanal 16.1 nehmen auf der Fahrzeugquerachse 15 eine mittige Position ein.

Da das verschiebbare Gewicht 5 in einem bevorzugten Ausführungsbeispiel in seinem Innern Funktionselemente wie Energiespeicher, Energiewandler, Hydraulikpumpen, Ventile und Hydraulikölspeicher beinhaltet, nimmt es eine vergleichsweise große Ausdehnung in Richtung der Fahrzeugquerachse 15 ein. Idealerweise wird nur ein einziges verschiebbares Gewicht 5 verwendet, es können durchaus aber auch mehrere kleinere verwendet werden, die dann nicht mehr mittig liegen müssen.

Auf beiden Seiten des verschiebbaren Gewichts 5 wird in dem bevorzugten Ausführungsbeispiel je ein Gestänge 11.1 und 11.2 angeordnet, welche aus den vier Stangen 18.1, 18.2, 18.3 und 18.4 besteht. Den Gestängen 11.1 und 11.2 werden die beiden zweiten und dritten Bewegungskanäle 16.2 und 16.3 zugeordnet, um deren Bewegungen in Richtung der Hauptfahrzeugachse 3 zu gewährleisten. Bei dem bevorzugten Ausführungsbeispiel werden die beiden Schwenkarme 6.1 und 6.2 sowie in derselben Ebenen liegend die beiden Arbeitsarme 7.1 und 7.2 in Richtung der Fahrzeugquerachse 15 weiter außen liegend am Fahrzeugrahmen 12 angebracht. Dabei bewegen sich die beiden Schwenkarme 6.1, 6.2 und die zugehörigen beiden Arbeitsarme 7.1, 7.2 auf derselben Ebene. Ihnen werden die beiden vierten und fünften Bewegungskanäle 16.4 und 16.5 zugeordnet. Die Breite dieser vierten und fünften Bewegungskanäle 16.4, 16.5 kann somit sehr klein gehalten werden.

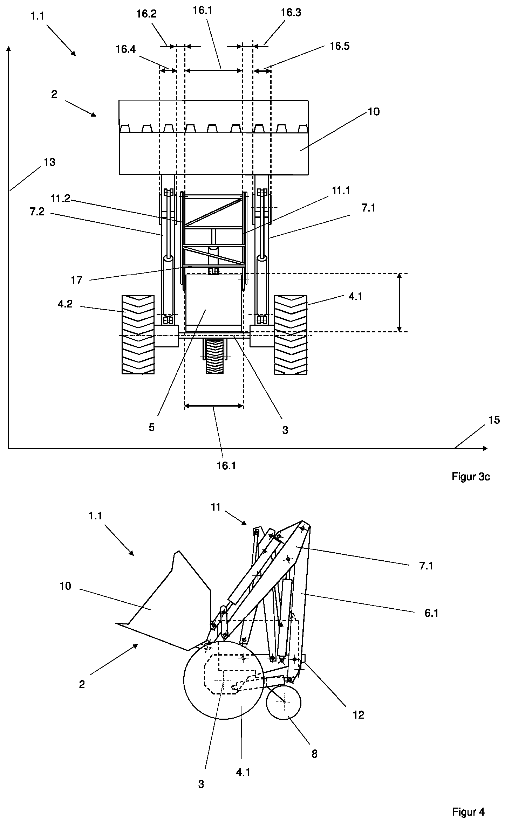

In Figur 3c ist die erfindungsgemäße Arbeitsmaschine 1.1 in einer weiteren Ansicht dargestellt. Der erste Bewegungskanal 16.1 ist nach unten durch die Hauptfahrzeugachse 3 begrenzt. Das verschiebbare Gewicht 5 befindet sich im eingezogenen Zustand also oberhalb der Hauptfahrzeugachse 3. Nach oben hin nimmt das verschiebbare Gewicht 5 so viel Platz ein, wie es durch die inneren Elemente vorgegeben wird. Darüber können die Gestänge 11.1 und 11.2 durch Querstäbe 17 miteinander verbunden werden, um dadurch eine große Stabilität zu erreichen. Somit können die Stangen 18.1, 18.2, 18.3 und 18.4 in Richtung der Fahrzeugquerachse 15 sehr klein und platzsparend dimensioniert werden. Dadurch nehmen somit die zweiten und dritten Bewegungskanäle 16.2 und 16.3 nur sehr wenig Bauraum in diese Richtung ein. Der Vorteil liegt darin, dass die Arbeitsmaschine 1.1 dadurch vergleichsweise schmal gebaut werden kann.

In Figur 4 ist die erfindungsgemäße Arbeitsmaschine 1.1 in ihrem kurzen Zustand dargestellt. Dabei befindet sich das Arbeitsgerät 2 in einer Position, die weit an die Hauptfahrzeugachse 3 heranreicht. Gleichzeitig befindet sich das verschiebbare Gewicht 5 in einer Position, die weit an die Hauptfahrzeugachse 3 heranreicht, beziehungsweise zum Teil oberhalb von dieser liegt. Somit wird ein sehr kompaktes Fahrzeug zur Verfügung gestellt.

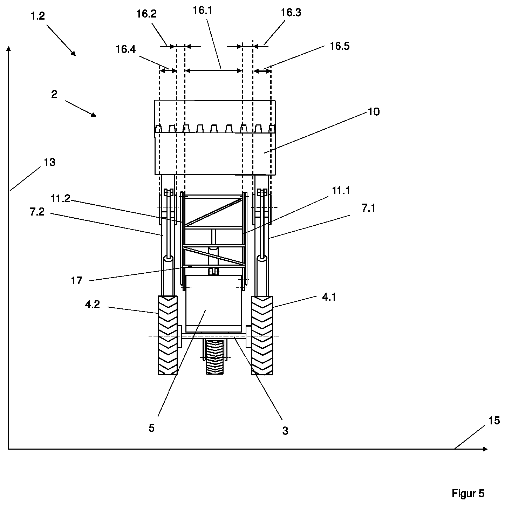

In Figur 5 ist ein weiteres Ausführungsbeispiel der erfindungsgemäßen Arbeitsmaschine 1.2 dargestellt. Dabei befinden sich die Radelemente 4.1 und 4.2 in Richtung der Fahrzeugquerachse 15 in demselben Bereich, wie die Schwenkarme 6.1, 6.2 und Arbeitsarme 7.1, 7.2. Der Vorteil liegt darin, dass somit die Fahrzeugbreite sehr klein gehalten werden kann. Bei Einsatzorten innerhalb von Gebäuden kann die Arbeitsmaschine 1.2 durch enge Flure fahren oder durch enge Türöffnungen.

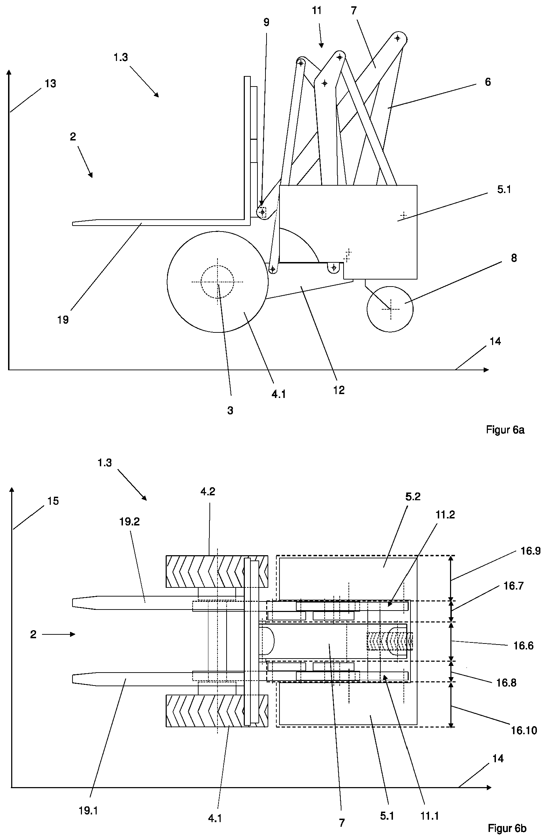

In Figur 6a ist eine weitere erfindungsgemäße Arbeitsmaschine 1.3 dargestellt, die die Nachteile der Arbeitsmaschinen aus dem Stand der Technik beseitigt oder zumindest minimiert. Die erfindungsgemäße Arbeitsmaschine 1.3 umfasst ein Arbeitsgerät 2. Bei dem dargestellten Arbeitsgerät 2 handelt es sich um eine Staplergabel, wie sie bei Staplern aus dem Stand der Technik eingesetzt wird. Als Arbeitsgerät 2, das an der Aufnahme 9 angeordnet ist, sind aber sämtliche Arbeitsgeräte denkbar, die im Bauwesen und/oder in der Landwirtschaft genutzt werden und die ein Trägerfahrzeug benötigen. Das Arbeitsgerät 2 oder die Aufnahme 9 für ein Arbeitsgerät ist durch mindestens einen Schwenkarm 6 mit mindestens einem daran drehbar angeordnetem Arbeitsarm 7 an einem Fahrzeugrahmen 12 angeordnet. Bei der erfindungsgemäßen Arbeitsmaschine 1.3 nehmen der Schwenkarm 6 und der Arbeitsarm 7 eine mittige Position auf einer Fahrzeugquerachse 15 ein. Durch die Verwendung von nur einem Schwenkarm und nur einem Arbeitsarm können deren Bewegungen durch wenige Antriebe/Stellelemente erfolgen. Dadurch ergibt sich ein niedriges Fahrzeuggewicht sowie niedrige Herstellungskosten. Somit wird die Verwendung von elektrischen Stellelementen möglich, die im Einzelnen zwar teuer sind. Wobei sich deren höhere Kosten durch die niedrige Anzahl nicht ungünstig auf die Gesamtkosten der Arbeitsmaschine auswirken.

Weiterhin umfasst die erfindungsgemäße Arbeitsmaschine 1.3 zwei verschiebbare Gewichte 5.1, 5.2. Diese sind über zwei Gestänge 11.1, 11.2 mit dem Fahrzeugrahmen 12 verbunden. Dabei sind die Gestänge 11.1, 11.2 so angeordnet, dass die verschiebbaren Gewichte 5.1, 5.2 in einem weiten Bereich verschoben werden können. Somit können diese sehr nahe an die Hauptfahrzeugachse 3 herangeführt werden wodurch das Fahrzeug sehr kompakt ist. Durch den weiten Verschiebebereich können die verschiebbaren Gewichte 5.1, 5.2 vergleichsweise klein sein und dennoch über die Hebelwirkung das Gewicht eines schweren Arbeitsgeräts 2 ausgleichen, wenn dieses angehoben wird, ohne dass das Fahrzeug seine stabile Lage verliert.

In Figur 6b ist die erfindungsgemäße Arbeitsmaschine 1.3 in einer weiteren Ansicht dargestellt. Um das Arbeitsgerät 2 entlang der Fahrzeuglängsachse 14 weit bis über die Hauptfahrzeugachse 3 heranziehen zu können, ohne dass dabei der Schwenkarm 6 und der Arbeitsarm 7 durch andere Elemente im Fahrzeug behindert werden, wird dem Schwenkarm 6 und dem Arbeitsarm 7 ein sechster Bewegungskanal 16.6 zugeordnet. In dem sechsten Bewegungskanal 16.6 befinden sich keine anderen Elemente, unabhängig von deren Bewegungen beziehungsweise deren Position.

Auf beiden Seiten des Schwenkarms 6 und des Arbeitsarms 7 werden in dem bevorzugten Ausführungsbeispiel je ein Gestänge 11.1 und 11.2 angeordnet. Den beiden Gestängen 11.1 und 11.2 werden die beiden siebten und achten Bewegungskanäle 16.7 und 16.8 zugeordnet, um deren Beweglichkeit in Richtung der Hauptfahrzeugachse zu gewährleisten. Bei dem bevorzugten Ausführungsbeispiel werden die verschiebbaren Gewichte 5.1 und 5.2 in Richtung der Fahrzeugquerachse 15 weiter außen liegend angeordnet. Dabei bewegen sich die verschiebbaren Gewichte 5.1 und 5.2 in den ihnen zugeordneten beiden neunten und zehnten Bewegungskanälen 16.9 und 16.10. Dadurch ergibt sich der Vorteil, dass die verschiebbaren Gewichte 5.1, 5.2 weit an den Bereich der Hauptfahrzeugachse 3 herangezogen werden können. Da sich der sechste Bewegungskanal 16.6 für den ersten Schwenkarm 6 und den ersten Arbeitsarm 7, die beiden siebten und achten Bewegungskanäle 16.7 und 16.8 für die Gestänge 11.1 und 11.2 und die beiden neunten und zehnten Bewegungskanäle 16.9 und 16.10 für die verschiebbaren Gewichte 5.1 und 5.2 gegenseitig nicht behindern, können das Arbeitsgerät 2 und die verschiebbaren Gewichte 5.1 und 5.2 gleichzeitig in Richtung der Fahrzeugmitte gezogen werden, wodurch das Fahrzeug eine sehr kompakte Baulänge einnimmt. Durch die kurze Baulänge werden sehr agile und schnelle Bewegungen des Fahrzeugs erreicht.

Bei einem bevorzugten Ausführungsbeispiel der erfindungsgemäßen Arbeitsmaschine 1.3 sind die beiden verschiebbaren Gewichte 5.1, 5.2 an ihrem hinteren Ende fest miteinander verbunden. Dadurch können sie durch ein einziges Antriebselement bzw. ein einziges Stellelement bewegt werden. Dadurch dass die Verbindungselemente der beiden verschiebbaren Gewichte 5.1, 5.2 am hinteren Ende des Fahrzeugs angeordnet werden, beziehungsweise am hinteren Ende der Gewichte 5.1, 5.2, werden dadurch die Bewegungen des Schwenkarms 6 und des Arbeitsarms 7 sowie der Gestänge 11.1, 11.2 nicht störend beeinflusst.

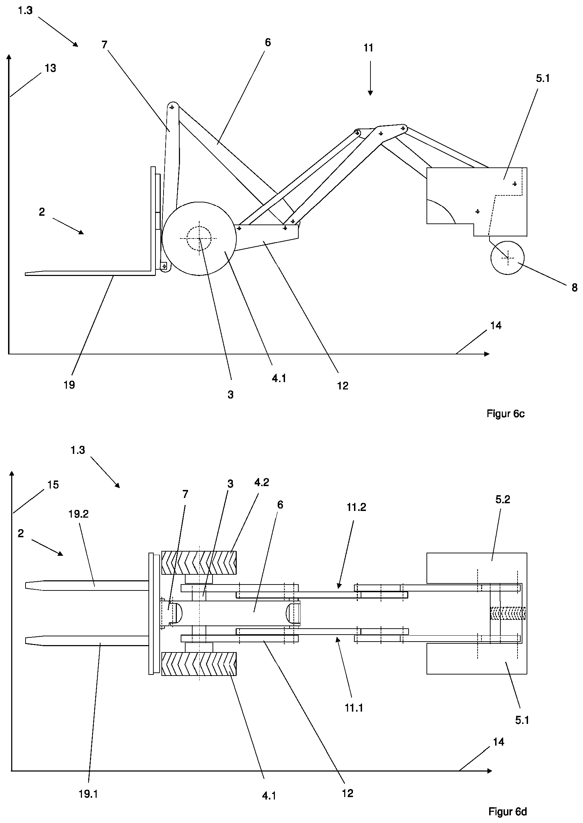

In Figur 6c ist die erfindungsgemäße Arbeitsmaschine 1.3 in einer gestreckten Position dargestellt.

In Figur 6d ist die erfindungsgemäße Arbeitsmaschine 1.3 in einer gestreckten Position in einer weiteren Ansicht dargestellt.

**Bezugszeichenliste**

| | | | |
|---|---|---|---|
| 1 | Arbeitsmaschine | 56 | Hauptfahrzeugachse |
| 2 | Arbeitsgerät | 57 | Radelemente |
| 3 | Hauptfahrzeugachse | 58 | Hilfsrad |
| 4 | Radelement | 59 | Verschiebbares Gewicht |
| 5 | Verschiebbares Gewicht | 60 | Schwenkarm |
| 6 | Schwenkarm | 61 | Arbeitsarm |
| 7 | Arbeitsarm | 62 | Hebel |
| 8 | Hilfsrad | | |
| 9 | Aufnahme | | |
| 10 | Schaufel | | |
| 11 | Gestänge | | |
| 12 | Fahrzeugrahmen | | |
| 13 | Fahrzeughochachse | | |
| 14 | Fahrzeuglängsachse | | |
| 15 | Fahrzeugquerachse | | |
| 16 | Bewegungskanal | | |
| 17 | Querstab | | |
| 18 | Stange | | |
| 19 | Staplergabel | | |
| 50 | Arbeitsmaschine | | |
| 51 | Gegengewicht | | |
| 52 | Arbeitsgerät | | |
| 53 | Hubrahmen | | |
| 54 | Gelenk | | |
| 55 | Fahrzeugrahmen | | |

## Patentansprüche

1. Arbeitsmaschine (1.1, 1.2,1.3) umfassend:
- genau eine Hauptfahrzeugachse (3),
- beidseitig an der Hauptfahrzeugachse (3) angeordnete Radelemente (4.1, 4.2),
- ein Arbeitsgerät (2) oder eine Aufnahme (9) für ein Arbeitsgerät, wobei dieses durch einen Schwenkarm (6, 6.1, 6.2) mit einem drehbar angeordneten Arbeitsarm (7, 7.1, 7.2) an einem Fahrzeugrahmen (12) angeordnet ist,
**dadurch gekennzeichnet, dass**
mindestens ein verschiebbares Gewicht (5, 5.1, 5.2), wobei dieses durch mindestens ein Gestänge (11, 11.1, 11.2) an einem Fahrzeugrahmen (12) angeordnet ist, wobei dem verschiebbaren Gewicht (5, 5.1, 5.2), dem/den Gestängen (11, 11.1, 11.2) und dem Schwenkarm (6, 6.1, 6.2) mit dem Arbeitsarm (7, 7.1, 7.2) jeweils ein ausschließlicher Bewegungskanal (16.1, 16.2, 16.3, 16.4, 16.5, 16.6, 16.7, 16.8, 16.9, 16.10) entlang der Fahrzeuglängsachse (14) zugeordnet ist.

2. Arbeitsmaschine (1.1, 1.2, 1.3) nach Anspruch 1, **dadurch gekennzeichnet, dass** der erste Bewegungskanal (16.1) für das verschiebbare Gewicht (5) eine auf einer Fahrzeugquerachse (15) mittige Position einnimmt.

3. Arbeitsmaschine (1.1, 1.2, 1.3) nach Anspruch 2, **dadurch gekennzeichnet, dass** mindestens der zweite und dritte Bewegungskanal (16.2, 16.3) für mindestens zwei der Gestänge (11.1, 11.2) seitlich in Richtung der Fahrzeugquerachse (15) angrenzend zu dem ersten Bewegungskanal (16.1) angeordnet sind.

4. Arbeitsmaschine (1.1, 1.2, 1.3) nach Anspruch 2, **dadurch gekennzeichnet, dass** mindestens zwei Schwenkarme (6.1, 6.2) und mindestens zwei Arbeitsarme (7.1, 7.2) so angeordnet sind, dass je einer der Schwenkarme (6.1, 6.2) und je einer der Arbeitsarme (7.1, 7.2) in derselben Ebene liegen und jeweils nur einen vierten und/oder fünften Bewegungskanal (16.4, 16.5) beanspruchen.

5. Arbeitsmaschine (1.1, 1.2, 1.3) nach Anspruch 4, **dadurch gekennzeichnet, dass** mindestens der vierte und der fünfte Bewegungskanal (16.4, 16.5) für mindestens die zwei Schwenkarme (6.1, 6.2) und den beiden zugeordneten Arbeitsarmen (7.1, 7.2) seitlich in Richtung der Fahrzeugquerachse (15) angrenzend zu den zweiten und dritten Bewegungskanälen (16.2, 16.3) angeordnet sind.

6. Arbeitsmaschine (1.1, 1.2, 1.3) nach einem der vorigen Ansprüche 2 bis 5, **dadurch gekennzeichnet, dass** die Radelemente (4.1, 4.2) in Richtung der Fahrzeugquerachse (15) im selben Bereich wie der vierten und der fünften Bewegungskanäle (16.4, 16.5) für die beiden Schwenkarme (6.1, 6.2) und die beiden Arbeitsarme (7.1, 7.2) liegen.

7. Arbeitsmaschine (1.1, 1.2, 1.3) nach Anspruch 1, **dadurch gekennzeichnet, dass** der sechste Bewegungskanal (16.6) für den ersten Schwenkarm (6) und dem zugeordneten ersten Arbeitsarm (7) eine auf einer Fahrzeugquerachse (15) mittige Position einnimmt.

8. Arbeitsmaschine (1.1, 1.2, 1.3) nach Anspruch 7, **dadurch gekennzeichnet, dass** mindestens die beiden siebten und achten Bewegungskanäle (16.7, 16.8) für mindestens zwei Gestänge (11.1, 11.2) seitlich in Richtung der Fahrzeugquerachse (15) angrenzend zu dem sechsten Bewegungskanal (16.6) des ersten Schwenkarms (6) und des ersten Arbeitsarms (7) angeordnet sind.

9. Arbeitsmaschine (1.1, 1.2, 1.3) nach Anspruch 7 oder 8, **dadurch gekennzeichnet, dass** mindestens die beiden neunten und zehnten Bewegungskanäle (16.9, 16.10) für mindestens zwei verschiebbare Gewichte (5.1, 5.2) seitlich in Richtung der Fahrzeugquerachse (15) angrenzend zu den siebten und achten Bewegungskanälen (16.7, 16.8) der Gestänge (11.1, 11.2) angeordnet sind.

10. Arbeitsmaschine (1.1, 1.2, 1.3) nach einem der vorigen Ansprüche 7 bis 9, **dadurch gekennzeichnet, dass** die verschiebbaren Gewichte (5.1; 5.2) auf der hinteren Fahrzeugseite fest miteinander verbunden sind.

## Claims

1. Work machine (1.1, 1.2, 1.3) comprising:
- exactly one main vehicle axle (3),
- wheel elements (4.1, 4.2) arranged on both sides of the main vehicle axle (3),
- a working tool (2) or a receptacle (9) for a working tool, wherein the working tool or the receptacle is arranged on a vehicle frame (12) by means of a pivot arm (6, 6.1, 6.2) with a rotatably arranged working arm (7, 7.1, 7.2),
**characterized in that**
at least one displaceable weight (5, 5.1, 5.2) is arranged on the vehicle frame (12) by means of at least one linkage (11, 11.1, 11.2), wherein the displaceable weight (5, 5.1, 5.2), the linkage or linkages (11, 11.1, 11.2), and the pivot arm (6, 6.1, 6.2) with the working arm (7, 7.1, 7.2) are each assigned an exclusive movement channel (16.1, 16.2, 16.3, 16.4, 16.5, 16.6, 16.7, 16.8, 16.9, 16.10) along the vehicle longitudinal axis (14).

2. Work machine (1.1, 1.2, 1.3) according to claim 1, **characterized in that** the first movement channel (16.1) for the displaceable weight (5) occupies a central position on a vehicle transverse axis (15).

3. Work machine (1.1, 1.2, 1.3) according to claim 2, **characterized in that** at least the second and third movement channels (16.2, 16.3) for at least two of the linkages (11.1, 11.2) are arranged laterally in the direction of the vehicle transverse axis (15) adjacent to the first movement channel (16.1).

4. Work machine (1.1, 1.2, 1.3) according to claim 2, **characterized in that** at least two pivot arms (6.1, 6.2) and at least two working arms (7.1, 7.2) are arranged such that one of the pivot arms (6.1, 6.2) and one of the working arms (7.1, 7.2) lie in the same plane and each occupy only a fourth and/or fifth movement channel (16.4, 16.5).

5. Work machine (1.1, 1.2, 1.3) according to claim 4, **characterized in that** at least the fourth and the fifth movement channel (16.4, 16.5) for at least the two pivot arms (6.1, 6.2) and the two associated working arms (7.1, 7.2) are arranged laterally in the direction of the vehicle transverse axis (15) adjacent to the second and third movement channels (16.2, 16.3).

6. Work machine (1.1, 1.2, 1.3) according to at least one of claims 2 to 5, **characterized in that** the wheel elements (4.1, 4.2) are arranged, in the direction of the vehicle transverse axis (15), in the same region as the fourth and the fifth movement channels (16.4, 16.5) for the two pivot arms (6.1, 6.2) and the two working arms (7.1, 7.2).

7. Work machine (1.1, 1.2, 1.3) according to claim 1, **characterized in that** the sixth movement channel (16.6) for the first pivot arm (6) and the associated first working arm (7) occupies a central position on a vehicle transverse axis (15).

8. Work machine (1.1, 1.2, 1.3) according to claim 7, **characterized in that** at least both the seventh and eighth movement channels (16.7, 16.8) for at least two linkages (11.1, 11.2) are arranged laterally in the direction of the vehicle transverse axis (15) adjacent to the sixth movement channel (16.6) of the first pivot arm (6) and the first working arm (7).

9. Work machine (1.1, 1.2, 1.3) according to claim 7 or 8, **characterized in that** at least both the ninth and tenth movement channels (16.9, 16.10) for at least two displaceable weights (5.1, 5.2) are arranged laterally in the direction of the vehicle transverse axis (15) adjacent to the seventh and eighth movement channels (16.7, 16.8) of the linkages (11.1, 11.2).

10. Work machine (1.1, 1.2, 1.3) according to at least one of claims 7 to 9, **characterized in that** the displaceable weights (5.1, 5.2) are fixedly connected to one another on the rear side of the vehicle.

## Revendications

1. Engin de travail (1.1, 1.2, 1.3) comprenant :
- exactement un essieu principal (3),
- des éléments de roue (4.1, 4.2) disposés de part et d'autre de l'essieu principal (3),
- un dispositif de travail (2) ou un logement (9) pour un dispositif de travail, celui-ci étant disposé sur un châssis de véhicule (12) par l'intermédiaire d'un bras pivotant (6, 6.1, 6.2) muni d'un bras de travail (7, 7.1, 7.2) monté de manière rotative,
**caractérisé par**
au moins un poids mobile (5, 5.1, 5.2), celui-ci étant disposé sur un châssis de véhicule (12) par l'intermédiaire d'au moins une tringlerie (11, 11.1, 11.2), le poids mobile (5, 5.1, 5.2), la ou les tringleries (11, 11.1, 11.2) et le bras pivotant (6, 6.1, 6.2) muni du bras de travail (7, 7.1, 7.2) disposant chacun d'un canal de mouvement exclusif (16.1, 16.2, 16.3, 16.4, 16.5, 16.6, 16.7, 16.8, 16.9, 16.10) le long de l'axe longitudinal (14) du véhicule.

2. Engin de travail (1.1, 1.2, 1.3) selon la revendication 1,
**caractérisé en ce que** le premier canal de mouvement (16.1) conçu pour le poids mobile (5) occupe une position centrale sur un axe transversal (15) du véhicule.

3. Engin de travail (1.1, 1.2, 1.3) selon la revendication 2,
**caractérisé en ce qu'**au moins les deuxième et troisième canaux de mouvement (16.2, 16.3) conçus pour au moins deux des tringleries (11.1, 11.2) sont disposés latéralement dans la direction de l'axe transversal (15) du véhicule à proximité du premier canal de mouvement (16.1).

4. Engin de travail (1.1, 1.2, 1.3) selon la revendication 2,
**caractérisé en ce qu'**au moins deux bras pivotants (6.1, 6.2) et au moins deux bras de travail (7.1, 7.2) sont disposés de telle sorte que l'un des bras pivotants (6.1, 6.2) et l'un des bras de travail (7.1, 7.2) se trouvent dans le même plan et n'utilisent respectivement qu'un quatrième et/ou un cinquième canal de mouvement (16.4, 16.5).

5. Engin de travail (1.1, 1.2, 1.3) selon la revendication 4,
**caractérisé en ce qu'**au moins les quatrième et cinquième canaux de mouvement (16.4, 16.5) conçus pour au moins les deux bras pivotants (6.1, 6.2) et les deux bras de travail associés (7.1, 7.2) sont disposés latéralement dans la direction de l'axe transversal (15) du véhicule à proximité des deuxième et troisième canaux de mouvement (16.2, 16.3).

6. Engin de travail (1.1, 1.2, 1.3) selon l'une des revendications précédentes 2 à 5,
**caractérisé en ce que** les éléments de roue (4.1, 4.2) sont situés dans la direction de l'axe transversal (15) du véhicule dans la même zone que les quatrième et cinquième canaux de mouvement (16.4, 16.5) conçus pour les deux bras pivotants (6.1, 6.2) et les deux bras de travail (7.1, 7.2).

7. Engin de travail (1.1, 1.2, 1.3) selon la revendication 1,
**caractérisé en ce que** le sixième canal de mouvement (16.6) conçu pour le premier bras pivotant (6) et le premier bras de travail associé (7) occupe une position centrale sur un axe transversal (15) du véhicule.

8. Engin de travail (1.1, 1.2, 1.3) selon la revendication 7,
**caractérisé en ce qu'**au moins les septième et huitième canaux de mouvement (16.7, 16.8) conçus pour au moins deux tringleries (11.1, 11 .2) sont disposés latéralement dans la direction de l'axe transversal (15) du véhicule à proximité du sixième canal de mouvement (16.6) du premier bras pivotant (6) et du premier bras de travail (7).

9. Engin de travail (1.1, 1.2, 1.3) selon la revendication 7 ou 8,
**caractérisé en ce qu'**au moins les neuvième et dixième canaux de mouvement (16.9, 16.10) conçus pour au moins deux poids mobiles (5.1, 5.2) sont disposés latéralement dans la direction de l'axe transversal (15) du véhicule à proximité des septième et huitième canaux de mouvement (16.7, 16.8) des tringleries (11.1, 11.2).

10. Engin de travail (1.1, 1.2, 1.3) selon l'une des revendications précédentes 7 à 9,
**caractérisé en ce que** les poids mobiles (5.1 ; 5.2) sont reliés solidairement l'un à l'autre du côté arrière du véhicule.
